(19) Europäisches Patentamt
European Patent Office
Office européen des brevets

(11) **EP 4 279 329 A1**

(12) **EUROPEAN PATENT APPLICATION**

(43) Date of publication:
**22.11.2023 Bulletin 2023/47**

(21) Application number: **22173679.6**

(22) Date of filing: **17.05.2022**

(51) International Patent Classification (IPC):
**B60L 58/13** (2019.01)   **B60L 58/14** (2019.01)
**B60L 58/21** (2019.01)   **B60L 58/16** (2019.01)
**H02J 7/00** (2006.01)

(52) Cooperative Patent Classification (CPC):
**B60L 58/13; B60L 58/14; B60L 58/16; B60L 58/21;
H02J 7/0069**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Scania CV AB
151 87 Södertälje (SE)**

(72) Inventors:
• NYLÉN, Ulf
  **144 64 Rönninge (SE)**
• LINDER, Johan
  **178 90 Ekerö (SE)**
• MAGNUSSON, Alexander
  **125 42 Älvsjö (SE)**

(74) Representative: **Scania CV AB
Patents, GP 117kv
151 87 Södertälje (SE)**

(54) **CONTROL DEVICE AND METHOD FOR CONTROLLING AN ENERGY STORAGE DEVICE**

(57)    A control device (100) and a method for controlling an energy storage device (2) of a vehicle (1) for the purpose of preserving capacity are provided. The method comprises, in response to a request for a maintenance measure, discharging (S106) at least one portion of the energy storage device (2) in a discharge operation during which the discharge rate ($I_d$) of the at least one portion is controlled to be equal to or above a predetermined discharge rate threshold ($I_{d\_th}$). The predetermined discharge rate threshold ($I_{d\_th}$) is greater than, and dependent of, a predefined charge rate ($I_c$) for the at least one portion of the energy storage device (2) or the energy storage device (2). A vehicle (1) comprising the control device (100) is also provided.

Fig. 4

EP 4 279 329 A1

# Description

## TECHNICAL FIELD

The present disclosure relates in general to a method for controlling an energy storage device of a vehicle for the purpose of preserving capacity of the energy storage device. The present disclosure further relates to a control device configured to control an energy storage device of a vehicle for the purpose of preserving capacity of the energy storage device. The present disclosure also relates in general to a computer program and a computer-readable storage medium, as well as to a vehicle.

## BACKGROUND

The effort to reduce emissions and improve fuel economy of heavy vehicles, such as trucks and buses, has led to the development of vehicles comprising propulsion systems that use one or more electrical machines. These electrical machines may be powered by energy storage devices, such as energy storage devices comprising secondary lithium-ion batteries, that require charging at designated charging stations or zones. Examples of such vehicles include Plug-in Hybrid Electric Vehicles (PHEVs) and Battery Electric Vehicles (BEVs).

Energy storage devices for vehicles, such as secondary lithium-ion energy storage devices, are built up from a number of electrochemical cells. These electrochemical cells can store or release energy through electrochemical reactions. Each electrochemical cell comprises an anode, a cathode and an electrolyte between the anode and the cathode. The electrolyte is an electrically insulating, but ionically conducting electrolyte enabling ions to move through the electrochemical cell. The electrochemical cell may further comprise a separator, arranged between the anode and cathode, configured to contain the electrolyte and to prevent short circuit between the anode and the cathode.

The service life of the energy storage devices, used for powering the electrical machine(s) of the vehicle, is an essential factor when considering the total life cost of the vehicle. Thus, there is a continuous strive to increase the service life of such energy storage devices. The service life of an energy storage device is dependent of the configuration of the energy storage device as such, for example by the selection of constituent materials of the energy storage device (such as the electrolyte or the electroactive materials). Thus, the service life of an energy storage device may be increased by modifying the configuration of the energy storage device. However, the service life is also affected by how the energy storage device is operated. In other words, the service life of an energy storage device is affected by for example how it is charged and discharged.

## SUMMARY

The object of the present invention is to increase the service life of an energy storage device of a vehicle.
The object is achieved by the subject-matter of the appended independent claim(s).
The present disclosure provides a method, performed by a control device, for controlling an energy storage device of a vehicle for the purpose of preserving capacity of the energy storage device. The method comprises a step of, in response to a request for a maintenance measure, discharging at least one portion of the energy storage device in a discharge operation during which the discharge rate of the at least one portion is controlled to be equal to or above a predetermined discharge rate threshold. Said predetermined discharge rate threshold is greater than, and dependent of, a predefined charge rate for the at least one portion of the energy storage device or the energy storage device.
By means of the herein described method, the service life of an energy storage device of a vehicle may be prolonged which in turn improves the total cost of operation of the vehicle. This is achieved by performing a discharge operation during which the discharge rate is controlled to be much higher than would be normally used for powering the vehicle, and which is both dependent of and higher than the predefined charge rate. It has surprisingly been found that performing such an action provides a preventive vitalization effect which results in a preservation of the capacity of the energy storage device. This is in contradiction with the generally accepted understanding that increasing the charge/discharge rates increases aging, and therefore reduces the service life of the energy storage device.
The discharge rate during the discharge operation may further be controlled to be equal to or below a predefined maximum allowable discharge rate. Thereby, it may be ensured that the energy storage device is not damaged during the discharge operation.
The step of discharging the at least one portion of the energy storage device may comprise discharging said at least one portion until said at least one portion reaches, or is expected to have reached, a first predefined state of charge. This avoids the risk of unintentionally damaging the energy storage device by discharging the at least one portion of the energy storage device to a too low state of charge. It also facilitates the control of the discharge operation by defining when to end the discharge operation of the at least one portion of the energy storage device.
The at least one portion may, at the start of the discharge operation, have a state of charge which is equal to or above a second predefined state of charge. Said second predefined state of charge may correspond to an upper limit of a predefined state of charge window for the at least one portion of the energy storage device. This has the advantage of enabling discharging, during the discharge operation, over as much as possible of usable state of charge window of the at least one portion of the energy storage device. This in turn improves the result of the discharge operation and may thus extend the service life of the energy storage device.

The method may further comprise, prior to the step of discharging the at least one portion in the discharge operation, charging the energy storage device so that the at least one portion of the energy storage device has a state of charge which is equal to or above the second predefined state of charge. Thereby, it may be ensured that the at least one portion of the energy storage device has a desired state of charge such that discharging, during the discharge operation may be performed over as much as possible of usable state of charge window of the at least one portion of the energy storage device.

The predefined charge rate mentioned above may for example be selected from the group comprising:

- a charge rate by which the at least one portion of the energy storage device or the energy storage device was charged during a charging operation prior to said discharge operation,
- an average charge rate by which the at least one portion of the energy storage device or the energy storage device has been charged with in a plurality of consecutive charging operations, and
- a recommended charge rate of the at least one portion of the energy storage device or of the energy storage device.

The predetermined discharge rate threshold may suitably be at least 150 % of the predefined charge rate. Preferably, the predetermined discharge rate threshold may be at least 180 % of the predefined charge rate. This further improves the result of the discharge operation and may thus extend the service life of the energy storage device.

The predetermined discharge rate threshold may be 1 C or higher. Suitably, the predefined discharge rate threshold may be 1.4 C or higher. This ensures that the discharge rate during the discharge operation is considerably higher than conventional discharge rates of the energy storage device currently used for powering a vehicle during a driving event. This further improves the result of the discharge operation and may thus extend the service life of the energy storage device.

The step of discharging the at least one portion of the energy storage device may comprise powering a propulsion unit of the vehicle by the energy storage device. This *inter alia* ensures that the vehicle can be operated as intended by for example a driver while the discharge operation is performed simultaneously for the purpose of preserving the capacity of the energy storage device. In other words, the step of discharging the at least one portion of the energy storage device may be performed while the vehicle is in motion.

The energy storage device may comprise one or more battery packs, each battery pack comprising at least two modules, and each of said at least two modules comprising a plurality of electrochemical cells. In such a case, the at least one portion of the energy storage device may be a first battery pack of said one or more battery packs, or a first module of said at least two modules. If so, the discharge rate of the at least one portion may, according to the herein described method, be controlled to be equal to or above a predetermined discharge rate threshold during the discharge operation by disabling, or at least reducing the amount of energy taken from, a second battery pack of the one or more battery packs or a second module of the at least two modules so as to increase the discharge rate from the at least one portion of the energy storage device.

The method may further comprise, in response to the request for a maintenance measure, inhibiting charging of the at least one portion of the energy storage device by regenerative braking until the discharge operation has been completed. Thereby, it is ensured that the discharge operation of the at least one portion of the energy storage device is not unintentionally interrupted or terminated.

As previously mentioned, the step of discharging the at least one portion of the energy storage device may be performed while the vehicle is in motion. According to another alternative, the step of discharging the at least one portion of the energy storage device may be performed while the vehicle is present at a charging station. The latter alternative has the advantage of providing more options for the control of the discharging operation. It may also enable discharging the whole energy storage device (i.e. all portions of the energy storage device) at the same time, thereby reducing the time for performing the capacity preserving action.

The present disclosure further relates to a computer program comprising instructions which, when executed by a control device, cause the control device to carry out the method as described above.

The present disclosure further relates to a computer-readable medium comprising instructions which, when executed by a control device, cause the control device to carry out the method as described above.

Moreover, in accordance with the present disclosure, a control device configured to control an energy storage device of a vehicle for the purpose of preserving capacity of the energy storage device is provided. The control device is configured to, in response to a request for a maintenance measure, discharge at least one portion of the energy storage device in a discharge operation while controlling the discharge rate of the at least one portion during said discharge operation to be equal to or above a predetermined discharge rate threshold. Said predetermined discharge rate threshold is greater than, and dependent of, a predefined charge rate for the at least one portion of the energy storage device or the energy storage device.

The control device provides the same advantages as described above with reference to the corresponding method for controlling an energy storage device of a vehicle for the purpose of preserving capacity of the energy storage device.

The present disclosure further provides a vehicle comprising an energy storage device and the control device described above. The energy storage device may be configured to power a propulsion unit of the vehicle. The vehicle may be a land-based heavy vehicle, such as a bus or a truck. Moreover, the vehicle may be a fully electrical vehicle or a hybrid vehicle.

BRIEF DESCRIPTION OF DRAWINGS

Fig. 1    schematically illustrates a side view of an example of a vehicle,

Fig. 2    schematically illustrates an example of an energy storage device,

Fig. 3    represents a flowchart schematically illustrating one exemplifying embodiment of the herein described method for controlling an energy storage device of a vehicle for the purpose of preserving capacity of the energy storage device;

Fig. 4    schematically illustrates an example of a discharge operation of at least one portion of an energy storage device as a function of time,

Fig. 5    schematically illustrates an exemplifying embodiment of a device which may comprise, consist of, or be comprised in a control device configured to control an energy storage device of a vehicle for the purpose of preserving capacity of the energy storage device according to the present disclosure,

Fig. 6    illustrates the state of health (SOH) as a function of number of full equivalent cycles for six different battery modules subjected to a cycling test.

DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

In the present disclosure, a discharge rate is considered to mean the steady current (i.e. constant current) that may be taken from an energy storage device of a defined capacity over a defined period of time. Similarly, a charge rate is considered to mean the steady current by which the energy storage device may be charged, from an empty state, to its full capacity over a defined period of time. Discharge/charge rates are frequently expressed as C-rates. When a C-rate is expressed in the present disclosure, it shall be considered to be expressed for a period of time of one hour. In other words, a discharge rate of 1C shall be considered to represent the steady discharge current that would consume the capacity of the energy storage device in one hour.

Furthermore, the term "maintenance measure" is in the present disclosure intended to mean an action which serves the purpose of maintaining or improving a condition of something, and should therefore be interpreted broadly. Thus, in the present disclosure the feature "a request for a maintenance measure" should be considered to mean a request for taking an action which may preserve or improve a condition, such as remaining capacity of an energy storage device.

The herein described method for controlling an energy storage device of a vehicle is primarily developed for energy storage devices comprising secondary lithium-ion electrochemical cells, but is not limited thereto. Energy storage devices comprising lithium-ion cells are currently the most frequently used energy storage devices in the automotive industry for powering a propulsion unit (electrical machine) of a vehicle. However, the herein described method may for example also be practiced on energy storage device comprising secondary sodium-ion electrochemical cells, potassium-ion electrochemical cells, or magnesium-ion electrochemical cells. The electrochemical cells may suitably be prismatic cells, but the present disclosure is not limited thereto.

An electrochemical cell of an energy storage device may be aged due to a variety of mechanisms, including for example growth of solid electrolyte interface (SEI) on the electrode material, loss of active material, degradation of the electrolyte and/or any binder materials in the cell through side reactions, etc.. Aging of an electrochemical cell leads to a loss of capacity of the cell and thus also a loss of capacity of the energy storage device. Great efforts have been made to understand the aging mechanisms of electrochemical cells in order to not only develop improved cell configurations but also improved strategies for operation of the electrochemical cells to reduce risk for aging. The general opinion appears to be that life expectancy of an electrochemical cell is negatively affected by increased charge and discharge rates.

The research on aging mechanisms of an electrochemical cell is often performed on the cell as such, and not necessarily on the whole energy storage device comprising a plurality of such electrochemical cells. It should here be noted that the aging of an electrochemical cell may be affected by the fact that it is present in an energy storage device comprising a plurality of electrochemical cells. For example, the electrochemical cells may, when arranged in the energy storage device, be restricted in terms of swelling of the cells depending on how they are mounted in the energy storage device and/or may be affected by how heating and cooling of the energy storage device is performed. Thus, an electrochemical cell may not necessarily degrade in the same way when arranged in an energy storage device as it would as a self-standing entity, even if subjected to the same charging/discharging cycle conditions. Therefore, the research on aging mechanism for individual electrochemical cells may not always be directly translated to aging mechanisms of an energy storage device comprising such electrochemical cells.

The present inventors have surprisingly found that the service life of an energy storage device may be prolonged if subjecting the energy storage device to a discharge operation during which the discharge rate is significantly increased compared to a rate by which the energy storage device is charged. This is in contrary to the general opinion that an increase in (charge rate and) discharge rate leads to an increase in the risk for aging of the energy storage device. The herein described method is developed based on this unexpected insight.

In accordance with the present disclosure, a method for controlling an energy storage device of a vehicle for the purpose of preserving capacity of the energy storage device over time is provided. In the present disclosure, the term "preserving capacity" should be considered to mean maintaining the capacity of the energy storage device above an acceptable capacity threshold for an extended period of time. In other words, the present disclosure relates to a method for controlling an energy storage device of a vehicle for the purpose of prolonging the service life of the energy storage device.

The present method comprises a step of, in response to a request for a maintenance measure, discharging at least one portion of the energy storage device (i.e. discharging at least a first portion of the energy storage device) in a discharge operation during which the discharge rate of the at least one portion is controlled to be equal to or above a predetermined discharge rate threshold. This predetermined discharge rate threshold is greater than a predefined charge rate for the at least one portion of the energy storage device, or greater than a predefined charge rate for the energy storage device as such. Furthermore, the predefined discharge rate threshold is dependent of said predefined charge rate.

The term "portion of an energy storage device" is here used to describe an entity or group of entities that may be charged and discharged and being comprised in the energy storage device. A portion of an energy storage device thus encompasses an individual or a group of electrochemical cells, an individual or a group of battery modules, and/or an individual or group of battery packs. The term "portion of an energy storage device" is thus used to distinguish from whole energy storage device as such. However, it should be noted that the step of discharging at least one portion of the energy storage device may according to one embodiment comprise discharging all portions of the energy storage device, i.e. discharging the whole energy storage device in the discharge operation. Suitably, the at least one portion of the energy storage device, subjected to discharging in the discharge operation discussed herein, is a battery module or a battery pack of the energy storage device.

Moreover, a discharge operation is here considered to mean an operation of discharging which is performed between two consecutive charging operations. The discharging operation may be temporarily paused without departing from the present scope, but no charging of the at least one portion of the energy storage device during the discharging operation may be performed. Described differently, initiating charging of the at least one portion of the energy storage device means that a preceding discharging operation has ended.

Furthermore, it should be noted that the predefined charge rate for the at least one portion of the energy storage device and the predefined charge rate for the energy storage device as such may typically be the same, but may in some cases differ from each other. For example, in case the energy storage device comprises a first battery pack (forming the at least one portion of the energy storage device) and a second battery pack (forming another portion of the energy storage device), the predefined charge rate of the first battery pack may differ from the predefined charge rate of the second battery pack. In case the energy storage device comprises a plurality of portions having different predefined charge rates, the predetermined discharge rate threshold may suitably be greater than at least the predefined charge rate of the at least one portion which is to be discharged in the discharge operation. However, in case the whole energy storage device is discharged in the same discharge operation, the predetermined discharge rate threshold is greater than a predefined charge rate of the energy storage device.

As described above, the predetermined discharge rate threshold is dependent of the predefined charge rate for the at least one portion of the energy storage device or the predefined charge rate of the energy storage device. That the predetermined discharge rate threshold is dependent of the predefined charge rate means that a change of the predefined charge rate also causes a change in the predetermined discharge rate threshold.

The predetermined discharge rate threshold, $I_{d\_th}$, may for example be described in accordance with Equation 1:

$$I_{d\_th} = k * I_c \qquad \text{Eq. 1}$$

wherein $I_c$ represents the predefined charge rate and $k$ represents a constant, which is greater than 1. Suitably, $k \geq 1.5$. In other words, the predetermined discharge rate may suitably be at least 150% of the predefined charge rate. Preferably, k ≥ 1.8. According to one embodiment, k=2.

The request for a maintenance measure mentioned above may be a request which is automatically issued by a control system of the vehicle, or by the control device configured to perform the herein described method. Such a request may for example be issued after a predetermined number of charging-discharging cycles of the energy storage device, after a predetermined amount of cycled energy, at predetermined time intervals, and/or due to a detection of a parameter indicative of an increased risk of loss of capacity of the energy storage device.

According to one alternative, the step of discharging at least one portion of the energy storage device in a discharge operation during which the discharge rate of the at least one portion is controlled to be equal to or above the predetermined discharge rate threshold is performed while the vehicle is driven, i.e. in motion. In such a case, the discharge of the at least one portion of the energy storage device may be achieved by powering a propulsion unit of the vehicle by means of the energy storage device. This may be performed by powering the propulsion unit solely by the at least one portion of the energy storage device, or by said at least one portion of the energy storage device in combination with one or more other portions of the energy storage device, depending on the power desired or needed for propulsion of the vehicle. In other words, the discharge rate of the at least one portion of the energy storage device may be controlled to be equal to or above the predetermined discharge rate threshold during the discharge operation by disabling a portion, other than the at least one first portion, of the energy storage device. Disabling is here intended to mean inhibiting withdrawal of energy from such a portion other than the first portion. Alternatively, the discharge rate of the at least one portion of the energy storage device may be controlled to be equal to or above the predetermined discharge rate threshold during the discharge operation by reducing the amount of energy taken from such a portion, other than the at least one first portion, of the energy storage device. The above mentioned portions of the energy storage device may for example be different battery packs and/or different battery modules of the energy storage device.

According to another alternative, the step of discharging at least one portion of the energy storage device in a discharge operation during which the discharge rate of the at least one portion is controlled to be equal to or above the predetermined discharge rate threshold may be performed at a charging station. In such a case, the discharging may be achieved by connecting the energy storage device to an electrical grid at the charging station. Said discharging may for example be used for charging an energy storage device of another vehicle connected to the same electrical grid, if desired. Performing the step of discharging during the discharge operation at a charging station has the advantage of allowing the whole energy storage device of the vehicle to be subjected to the discharging operation at the same time, and may therefore reduce the total time needed for performing the action. It also provides the advantage of enabling an easier control of the discharge rate during the discharge operation since it is not dependent of the power withdrawn from the energy storage device for the purpose of propulsion of the vehicle. However, it also means that the vehicle may be out of operation for a longer period of time compared to if the discharge operation is performed while the vehicle is in motion, which in some cases may be costly for a hauler.

As previously mentioned, the present method comprises a step of, in response to a request for a maintenance measure, discharging at least one portion of the energy storage device in a discharge operation during which the discharge rate of the at least one portion is controlled to be equal to or above a predetermined discharge rate threshold. Preferably, the discharge rate is controlled to be equal to the predetermined discharge rate threshold. However, in some situations, it may be necessary or desired to control the discharge rate during the discharge operation to be somewhat higher than the predetermined discharge rate threshold during a portion of or during the whole discharge operation. This may for example occur when said discharging operation is performed while the vehicle is in motion. In such cases, the ability to discharge the at least one portion of the energy storage device may be dependent of how said discharge is achieved. For example, if the discharge of the at least one portion of the energy storage device is performed by powering a propulsion unit of the vehicle, the possible discharge rate may be dependent on the power desired or needed for the propulsion unit for a particular driving event of the vehicle.

The discharge rate during the discharge operation is preferably further controlled to be equal to or below a predefined maximum allowable discharge rate. The predefined maximum allowable discharge rate may typically be a maximum allowable discharge rate specified by for example a manufacturer of the energy storage device, and set in order to avoid damage of the energy storage device. As evident to a person skilled in the art, the predefined maximum allowable discharge rate may be dependent of the temperature of the energy storage device during a discharge operation.

The step of discharging the at least one portion of the energy storage device may comprise discharging said at least one portion until said at least one portion reaches, or is expected to have reached, a first predefined state of charge. Thereby, it is ensured that the at least one portion of the energy storage device is not discharged to a too low state of charge. Said first predefined state of charge may correspond to a lower limit of a predefined state of charge window for the at least one portion of the energy storage device. The predefined state of charge window is here intended to mean the usable state of charge window defined for the at least one portion of the energy storage device and is defined by a minimum allowable state of charge and a maximum allowable state of charge, said limits typically being set for the purpose of avoiding a premature loss of capacity and in general being defined by a manufacturer of the energy storage device.

The step of discharging the at least one portion of the energy storage device is advantageously performed over the whole predefined state of charge window for the at least one portion of the energy storage device. In other words, at the start of the discharge operation, the at least one portion of the energy storage device should preferably have a state of charge which is equal to (or possibly above) a second predefined state of charge, wherein said second predefined state of charge corresponds to an upper limit of the predefined state of charge window for the at least one portion of the energy storage device.

It should here be noted that energy storage devices of heavy vehicles, such as buses or trucks, may today often be charged at a charging station only to a state of charge deemed appropriate in order to safely reach a geographical position where a subsequent charging operation may be performed, such as for reaching another charging station or reverting back to the original charging station. Therefore, in order to ensure that the at least one portion of the energy storage device has a state of charge which is equal to (or possibly above) the second predefined state of charge, the present method may also comprise a step of, prior to the step of discharging the at least one portion of the energy storage device in the discharge operation, charging the energy storage device so that the at least one portion of the energy storage device has a state of charge which is equal to (or possibly above) the second predefined state of charge. Said charging of the energy storage device so that the at least one portion of the energy storage device has a state of charge which is equal to the second predefined state of charge may be performed in response to the request for a maintenance measure as mentioned above.

The above mentioned predefined charge rate, of which the predetermined discharge rate threshold is dependent, may preferably be the charge rate by which the at least one portion of the energy storage device was charged during a charging operation prior to said discharge operation, preferably the charging operation immediately preceding the discharge operation of the at least one portion during which the discharge rate is controlled to be equal to or above the predetermined discharge rate threshold. It should here be noted that such a charge rate, by which the at least one portion of the energy storage device was charged during a charging operation prior to said discharge operation, may typically correspond to the charge rate of the whole energy storage device. According to an alternative, the predefined charge rate may correspond to an average charge rate by which the at least one portion of the energy storage device or the energy storage device has been charged with in a plurality of consecutive charging operations. According to yet another alterative, the predefined charge rate may correspond to a recommended charge rate of the at least one portion of the energy storage device or of the energy storage device, such as a recommended charge rate provided by a manufacturer of the energy storage device.

The predetermined discharge rate threshold should be considerably higher than the predefined charge rate to obtain the desired result of preserving capacity of the energy storage device. Therefore, the predetermined discharge rate threshold may suitably be at least 150 % of the predefined charge rate. Preferably, the predetermined discharge rate threshold is at least 180 % of the predefined charge rate. The reason for this is that it has been found that the best results appear to be obtained if the discharge rate during the discharge operation is about twice the predefined charge rate.

Energy storage devices of vehicle today are typically subjected to discharge rates of up to about 0.7 C during normal operation for powering the vehicle. However, the predetermined discharge rate threshold according to the present method may suitably be 1 C or higher. Suitably, the predefined discharge rate threshold is 1.4 C or higher. This means that the discharge rate of the at least one portion, during the discharge operation, according to the present method is controlled to be considerably higher than the discharge rates by which the energy storage device may be subjected to during normal operation if the present method is not activated.

A driving event of a heavy vehicle may typically comprise situations where the vehicle is braked by regenerative braking. This means that an electrical machine, otherwise used as propulsion unit, is operated as a generator converting kinetic energy of the vehicle to electrical energy used for charging the energy storage device. This is not desired when the herein described step of discharging the at least one portion of the energy device is to be performed. Therefore, the method may further comprise, in response to the request for a maintenance measure, inhibiting charging of the at least one portion of the energy storage device by regenerative braking until the discharge operation has been completed. It should here be noted that charging of portions of the energy storage device, other than the at least one portion, may still be allowed, if desired. In other words, it is not necessary to fully inhibit regenerative braking of the vehicle during the discharge operation. In practice, this would typically mean that, while the vehicle is regeneratively braked, the discharge operation of the at least one portion of the energy storage device is temporarily interrupted until said braking event is terminated.

As discussed above, the herein described method comprises, in response to a request for a maintenance measure, discharging at least one portion of the energy storage device in a discharge operation during which the discharge rate of the at least one portion is controlled to be equal to or above a predetermined discharge rate threshold. Naturally, it is desired that the whole energy storage device is subjected to an action for the purpose of the preserving capacity. Therefore, the above mentioned step is preferably repeated for another portion of the energy storage device when the discharge operation of the at least one portion is completed. This may be triggered by the same request for a maintenance measure, or the requests for a maintenance measure may be triggered separately for each portion of the energy storage device.

The method may naturally also comprise subjecting the at least one first portion to a plurality of consecutive discharge operations during which the discharge rate of the at least one portion is controlled to be equal to or above the predetermined discharge rate threshold, if deemed appropriate, without departing from the present disclosure. If so, two such consecutive discharge operations would naturally be separated from each other by a charge operation. According to one alternative, the charge rate during such a charge operation separating two consecutive discharge operations (during which the discharge rate is controlled to be equal to or above the predetermined discharge rate threshold) may be controlled to be equal to or less than the predefined charge rate.

The performance of the herein described method for controlling an energy storage device of a vehicle may be governed by programmed instructions. These programmed instructions typically take the form of a computer program which, when executed in or by a control device, cause the control device to effect desired forms of control action. Such instructions may typically be stored on a computer-readable medium.

The present disclosure further relates to a control device configured to control an energy storage device of a vehicle for the purpose of preserving capacity of the energy storage device in accordance with the method described above. The control device may be configured to perform any one of the steps of the method for controlling an energy storage device of a vehicle as described herein.

More specifically, in accordance with the present disclosure, a control device configured to control an energy storage device of a vehicle for the purpose of preserving capacity of the energy storage device is provided. The control device is configured to, in response to a request for a maintenance measure, discharge at least one portion of the energy storage device in a discharge operation while controlling the discharge rate of the at least one portion during said discharge operation to be equal to or above a predetermined discharge rate threshold. Said predetermined discharge rate threshold is greater that, and dependent of, a predetermined charge rate for the at least one portion of the energy storage device or the energy storage device.

The control device may comprise one or more control units. In case of the control device comprising a plurality of control units, each control unit may be configured to control a certain function or a certain function may be divided between more than one control units. The control device may be a control device of the energy storage device *per se,* or be separate from the energy storage device. For example, the control device may be incorporated in a battery management system of the energy storage device. The control device may be arranged in a vehicle, said vehicle comprising an energy storage device. Alternatively, parts of the control device may, if desired, be arranged remote from the vehicle. For example, one or more control units of the control device may be arranged at a remote control center and configured to communicate with one or more control units arranged on board the vehicle. One or more control units of the control device may alternatively be arranged at a charging station, if desired.

The control device may further be configured to determine the discharge rate threshold in dependence of the predefined charge rate.

The control device may also be configured to determine the predefined charge rate or to request information relating thereto from another controller. For example, the control device may be configured to determine the predefined charge rate to correspond to a charge rate by which the at least one portion of the energy storage device or the (whole) energy storage device was charged during a charging operation prior to said discharge operation. Such charging operation may be a charging operation immediately preceding the upcoming discharge operation performed in response to the request for a maintenance measure. Alternatively, the control device may be configured to determine the predefined charge rate to correspond to an average charge rate by which the at least one portion of the energy storage device or the energy storage device has been charged with in a plurality of consecutive charging operations. According to yet an alternative, the control device may be configured to determine the predefined charge rate to correspond to a recommended charge rate of the at least one portion of the energy storage device or of the energy storage device.

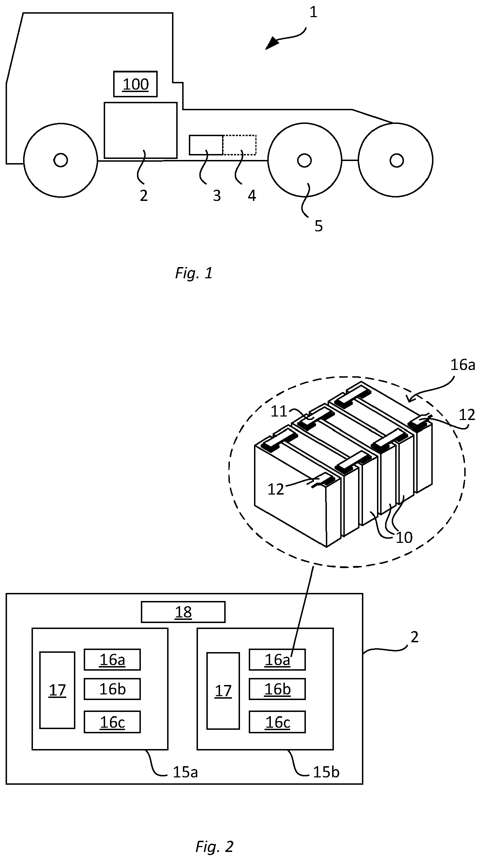

Figure 1 schematically illustrates a side view of an example of a vehicle 1, here illustrated as a truck. The vehicle 1 comprises at least one energy storage device 2 configured to power a propulsion unit 3, such as a first electrical machine. The propulsion unit 3 is configured to provide propulsion torque, optionally via a gearbox 4, to the driving wheels 5 of the vehicle 1. Albeit not illustrated in the figure, the vehicle 1 may comprise an additional propulsion unit, such as a combustion engine and/or a second electrical machine, if desired.

The vehicle 1 may further comprise a control device 100 configured to control the energy storage device 2. More specifically, the control device 100 is configured to control the energy storage device 2 in accordance with the herein described method for controlling an energy storage device of a vehicle for the purpose of preserving capacity of the energy storage device. For the purpose of performing the herein described method, the control device 100 may further be configured to control the propulsion unit 3 or at least communicate with a controller (not shown) configured to control the propulsion unit 3.

Figure 2 schematically illustrates one example of an energy storage device 2 of a vehicle, such as the vehicle 1 illustrated in Figure 1. The energy storage device 2 may comprise one or more battery packs. In the figure, a first battery pack 15a and a second battery pack 15b are shown. It should however be recognized that the energy storage device 2 may consist of only one battery pack or comprise more than two battery packs. In case the energy storage device comprises more than one battery pack, the battery packs may be connected in series or in parallel to each other.

Each battery pack 15a, 15b may in turn comprise one or more battery modules. In the figure, a first battery module 16a, a second battery module 16b, and a third battery module 16c are illustrated. Each battery pack 15a, 15b may also comprise a battery management system 17. The battery modules 16a, 16b, 16c may be connected in series and/or in parallel to each other within the battery pack. In case the energy storage device 2 comprises more than one battery pack, the battery management systems 17 of the different battery packs 15a, 15b may be configured to communicate with each other, and/or a master battery management system 18 of the energy storage device 2.

The battery modules 16a, 16b, and 16c may typically have the same configuration, but the present disclosure is not limited thereto. Each battery module 16a-16c may comprise a plurality of battery cells 10, as shown in the enlargement of a first battery module 16a in the upper right portion of the figure. The battery cells 10 may be stacked in the battery module 16a and fully or partly enclosed by a mechanical structure (not shown). The battery cells 10 may be connected to each other by a busbar structure 11. In the figure, the battery cells 10 are shown to be connected in series. It is however also possible to connect the battery cells in parallel, if desired. The first and the last battery cells 10 in the battery module 16a may in turn be connected to terminals 12. The battery cells 10 may for example be lithium-ion battery cells or sodium-ion battery cells, but are not limited thereto. Suitably, the battery cells may be prismatic cells.

The energy storage device 2 may be controlled by a control device configured therefore, such as the control device 100 described above. The control device 100 may be a part of the energy storage device 2 as such. For example, the control device 100 may be incorporated in a battery management system of the energy storage device (such as the master battery management system 18). Alternatively, the control device 100 may be any other control device of the vehicle. Parts of the control device 100 may also be arranged remote from the vehicle, if desired. For example, one or more parts of the control device 100 may be arranged at a charging station or at a remote control center. The control device 100 may comprise one or more control units. In case of the control device comprising a plurality of control units, each control unit may be configured to control a certain function or a certain function may be divided between more than one control units.

The herein described method may be used for controlling of the energy storage device 2 shown in figure 2. It should however be noted that energy storage devices of vehicles may have other configurations than the one illustrated in figure 2. The herein described method may be used for controlling energy storage devices of other configurations as well.

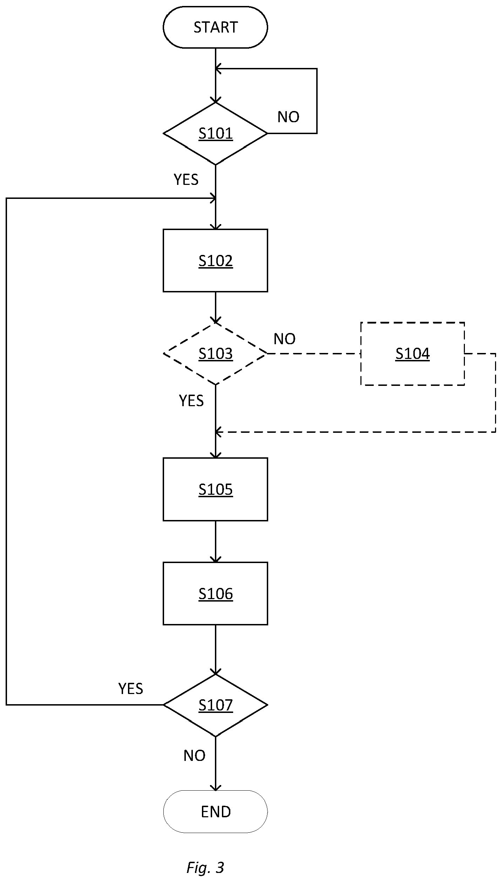

Figure 3 represents a flowchart schematically illustrating one exemplifying embodiment of the herein described method for controlling an energy storage device of a vehicle for the purpose of preserving capacity of the energy storage device. In the flowchart, optional steps of the exemplifying embodiment are illustrated by dashed lines.

The method comprises a first step S101 of determining whether there is a request for a maintenance measure. If there is no such request, the method may be reverted to start.

The method further comprises a step S102 of identifying at least one portion of the energy storage device to be subjected to a discharge operation for the purpose of preserving capacity of the energy storage device.

The method may optionally comprise a step S103 of determining whether the current state of charge of the at least one portion of the energy storage device, identified in step S102, is equal to or above a second predetermined state of charge threshold, wherein said second predefined state of charge corresponds to an upper limit of a predefined state of charge window for the identified portion of the energy storage device. In case the current state of charge of the identified portion of the energy storage device is less than the second predetermined state of charge threshold, the method may proceed to a step S104 of charging the identified portion of the energy storage device to at least the second predetermined state of charge threshold.

The method thereafter comprises a step S105 of determining a discharge rate for the identified portion of the energy storage device. The discharge rate is determined to be equal to or above a predetermined discharge rate threshold, depending on the possibilities of discharging the identified portion given by an operational condition of the vehicle. Said predetermined discharge rate threshold is in turn greater than, and dependent of, a predefined charge rate for the identified portion of the energy storage device or for the energy storage device as such.

The method thereafter comprises a step S106 of discharging the identified portion of the energy storage device, using the discharge rate obtained in step S105, until the identified portion of the energy storage device reaches, or is expected to have reached, a first predefined state of charge. Said first predefined state of charge may correspond to a lower limit of the predefined state of charge window for the identified portion of the energy storage device.

The method may thereafter comprise a step S107 of determining whether there are other portions of the energy storage device, other than the identified portion obtained in step S102, that should be subjected to the same action. If there are other portions that should be subjected to a discharge procedure according to the herein described method, the method is reverted back to step S102. Otherwise, the method may be ended.

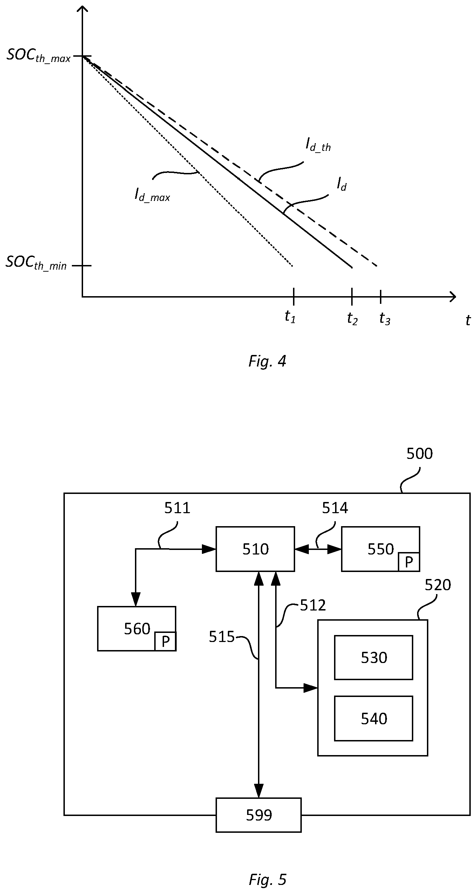

Figure 4 schematically illustrates an example of a discharge operation of at least one portion of an energy storage device as a function of time. During said discharge operation, the discharge rate $I_d$ of the at least one portion is here illustrated to be above a predetermined discharge rate threshold $I_{d\_th}$. However, as described above, the discharge rate $I_d$ may alternatively be controlled to be equal to the above a predetermined discharge rate threshold $I_{d\_th}$.

The discharge operation is here illustrated to be performed until a first predefined state of charge $SOC_{th\_min}$ has been reached. Said first predefined state of charge $SOC_{th\_min}$ may correspond to a lower limit of a predefined state of charge window for the at least one portion of the energy storage device. At the start of the discharge operation, the at least one portion of the energy storage device has a state of charge corresponding to a second predefined state of charge $SOC_{th\_max}$. Said second predefined state of charge $SOC_{th\_max}$ corresponds to an upper limit of the predefined state of charge window for the at least one portion of the energy storage device.

As shown in the figure, the discharge rate $I_d$ results in the at least one portion of the energy storage device reaching the first predefined state of charge $SOC_{th\_min}$ at $t_2$, whereas a discharge rate corresponding to the predetermined discharge rate threshold $I_{d\_th}$ would result in reaching the first predefined state of charge $SOC_{th\_min}$ at $t_3$. The discharge rate $I_d$ is also controlled to be less than a predefined maximum allowable discharge rate $I_{d\_max}$. If the at least one portion of the energy storage device would have been discharged with the predefined maximum allowable discharge rate $I_{d\_max}$, the first predefined state of charge $SOC_{th\_min}$ would have been reached at $t_1$.

Figure 5 schematically illustrates an exemplifying embodiment of a device 500. The control device 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for controlling an energy storage device of a vehicle for the purpose of preserving capacity of the energy storage device. The computer program comprises instructions for, in response to a request for a maintenance measure, discharging at least a portion of the energy storage device in a discharge operation during which the discharge rate of the at least one portion is controlled to be equal to or above a predetermined discharge rate threshold. Said predetermined discharge rate threshold is greater than, and dependent of, a predefined charged rate for the at least one portion of the energy storage device or the energy storage device.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an electrical or optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be affected by the device 500 by means of the data processing unit 510 which runs the program stored in the memory 560 or the read/write memory 550. When the device 500 runs the program, methods herein described are executed.

*Experimental results*

For the purpose of demonstrating the effect of the herein described method in a repeatable manner and within a reasonable time frame, six commercially available modules were subjected to controlled continuous cycling tests. The tested modules had identical configurations, meaning e.g. that they were constructed of the same materials as well as had the same arrangement of cells and mounting arrangement within the modules. The tested modules each comprised twelve conventional prismatic lithium ion cells connected in series and mounted in a stacked arrangement and enclosed by a casing.

The cycling tests were performed in a test chamber set at room temperature with forced air convention, and with forced temperature control of the modules to a module temperature of 25°C using water cooling.

During the cycling tests, the different modules were cycled between a state of charge (SOC) of 15% and a SOC of 65 %. This SOC window was considered to represent the usual SOC operating window for the tested modules. Moreover, during the cycling tests, the modules were cycled using different charge and discharge rates as specified in Table 1. Modules Ref 1, Ref 2 and Ref 3 were subjected to the same conditions for the purpose of verifying the results. Also, Mod 2 and Mod 3 were subjected to the same conditions for the purpose of verifying the results.

**Table 1**

| Module | Charge rate | Discharge rate |
| --- | --- | --- |
| Ref 1 | 1C | 1C |
| Ref 2 | 1C | 1C |
| Ref 3 | 1C | 1C |
| Mod 1 | 1C | 2C |
| Mod 2 | 0.5C | 1C |
| Mod 3 | 0.5C | 1C |

Between every charging and discharging, and vice versa, the modules were relaxed (i.e. rested) for 5 minutes in case of Ref 1, Ref 2, Ref 3 and Mod 1, and 10 minutes in case of Mod 2 and Mod 3. The difference in duration of the relaxation time was not deemed to have any substantial effect on the results obtained.

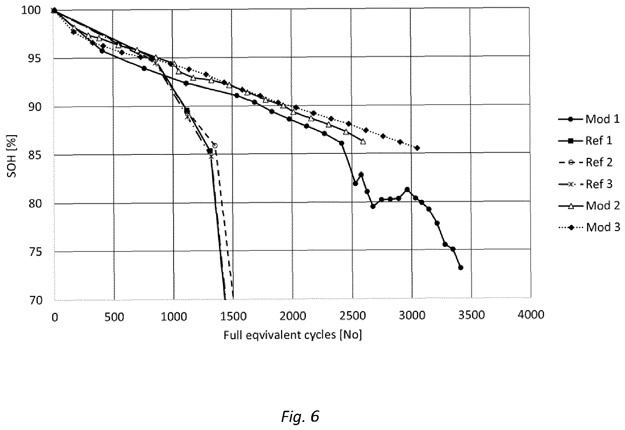

The total energy throughput was recalculated into full equivalent cycles where one cycle is defined as cycling 0-100-0 % SOC. Figure 6 illustrates the result of the cycling test in terms of state of health (SOH) as a function of number of full equivalent cycles for the different modules. The modules may be considered to have reached their end of service life when the SOH has reached 70%. Therefore, the cycling tests were interrupted when a SOH of 70% was reached for Ref 1, Ref 2 and Ref 3, respectively. The cycling test for Mod 1 was interrupted at a slightly higher SOH. It should also be noted here that the cycling tests for Mod 2 and Mod 3 were interrupted prematurely due to limited of test capacity, and it has therefore not been determined when they would reach a SOH of 70%.

The results clearly show that the modules which were subjected to a discharge rate which is twice the charge rate, i.e. Mod 1, Mod 2 and Mod 3, enable a considerably higher number of full equivalent cycles compared to the modules subjected to the same charge and discharge rates, i.e. Ref 1, Ref 2, and Ref 3, before reaching the end of the service life. The service life of an energy storage device is directly dependent on the service life of each portion of the energy storage device, where the weakest electrochemical cell determines the service life of the module comprising said cell and the weakest module determines the service life of the pack.

Although the herein described experimental tests represent cycling tests performed in a laboratory, and not under real driving conditions, the results clearly demonstrate that discharging a portion of an energy storage device using a discharge current which is considerably higher than the charge current used results in a considerably longer possible service life of the portion of the energy storage device. This is a surprising discovery since it goes against the general opinion within this technical field. The reason for the unexpected results demonstrated above is currently not completely understood, but is believed to be a result of at least partially mitigating one or more aging mechanisms in the cells.

In view of the fact that the results demonstrated above are not consistent with test results provided in the research literature on a cell scale, it is also currently believed that the arrangement of the cells in a mechanical structure, which may affect the possibility of the cells to breath during cycling, may have an impact on the test results. The present inventors have however seen, during cycling tests of individual electrochemical cells (similar to the tests described above but without water cooling of the electrochemical cells), that the service life of an electrochemical cell may at least in some cases be considerably prolonged when a substantially higher discharge rate than the charge rate was used. For example, at least 40% higher energy throughput (pack equivalent), before reaching a SOH of 70%, was seen for two electrochemical cells cycled between 15 % SOC and 85 % SOC using a charge rate of 1C and a discharge rate of 1.4C compared to two reference electrochemical cells of the same configuration cycled over the same SOC window using a charge rate of 1C and a discharge rate of 1C.

**Claims**

1. A method, performed by a control device (100), for controlling an energy storage device (2) of a vehicle (1) for the purpose of preserving capacity of the energy storage device (2), the method comprising a step of:

    in response to a request for a maintenance measure, discharging (S106) at least one portion of the energy storage device (2) in a discharge operation during which the discharge rate ($I_d$) of the at least one portion is controlled to be equal to or above a predetermined discharge rate threshold ($I_{d\_th}$),

wherein said predetermined discharge rate threshold ($I_{d\_th}$) is greater than, and dependent of, a predefined charge rate ($I_c$) for the at least one portion of the energy storage device (2) or the energy storage device (2).

2. The method according to claim 1, wherein the discharge rate ($I_d$) during the discharge operation is further controlled to be equal to or below a predefined maximum allowable discharge rate ($I_{d\_max}$).

3. The method according to any one of claims 1 or 2, wherein the step of discharging (S106) the at least one portion of the energy storage device comprises discharging said at least one portion until said at least one portion reaches, or is expected to have reached, a first predefined state of charge ($SOC_{th\_min}$).

4. The method according to any one of the preceding claims, wherein at the start of the discharge operation, the at least one portion of the energy storage device has a state of charge which is equal to or above a second predefined state of charge ($SOC_{th\_max}$), said second predefined state of charge ($SOC_{th\_max}$) corresponding to an upper limit of a predefined state of charge window for the at least one portion of the energy storage device.

5. The method according to claim 4, wherein the method further comprises, prior to the step of discharging (S016) the at least one portion of the energy storage device in the discharge operation, charging (S014) the energy storage device so that the at least one portion of the energy storage device has a state of charge which is equal to or above the second predefined state of charge ($SOC_{th\_max}$).

6. The method according to any one of the preceding claims, wherein the predefined charge rate is selected from the group comprising:

a charge rate by which the at least one portion of the energy storage device (2) or the energy storage device (2) was charged during a charging operation prior to said discharge operation, an average charge rate by which the at least one portion of the energy storage device (2) or the energy storage device (2) has been charged with in a plurality of consecutive charging operations, and a recommended charge rate of the at least one portion of the energy storage device (2) or of the energy storage device (2).

7. The method according to any one of the preceding claims, wherein said predetermined discharge rate threshold ($I_{d\_th}$) is at least 150 % of the predefined charge rate, preferably wherein the predetermined discharge rate threshold ($I_{d\_th}$) is at least 180 % of the predefined charge rate.

8. The method according to any one of the preceding claims, wherein said predetermined discharge rate threshold ($I_{d\_th}$) is 1 C or higher, preferably wherein said predetermined discharge rate threshold ($I_{d\_th}$) is 1.4 C or higher.

9. The method according to any one of the preceding claims, wherein the step of discharging (S106) the at least one portion of the energy storage device comprises powering a propulsion unit (3) of the vehicle (1) by the energy storage device (2).

10. The method according to claim 9, wherein

the energy storage device (2) comprises one or more battery packs (15a, 15b), each battery pack (15a, 15b) comprising at least two modules (16a, 16b, 16c), and each of said at least two modules (16a, 16b, 16c) comprising a plurality of electrochemical cells (10); wherein the at least one portion of the energy storage device (2) is a first battery pack (15a) of said one or more battery packs (15a, 15b) or a first module (16a) of said at least two modules(16a, 16b, 16c); and wherein the discharge rate ($I_d$) of the at least one portion is controlled to be equal to or above a predetermined discharge rate threshold ($I_{d\_th}$) during the discharge operation by disabling, or at least reducing the amount of energy taken from, a second battery pack (15b) of the one or more battery packs (15a, 15b) or a second module (16b) of the at least two modules (16a, 16b, 16c) so as to increase the discharge rate from the at least one portion of the energy storage device (2).

11. The method according to any one of claims 9 or 10, further comprising:
in response to the request for a maintenance measure, inhibiting charging of the at least one portion of the energy storage device (2) by regenerative braking until the discharge operation has been completed.

12. The method according to any one of claims 1 to 8, wherein the step of discharging (S016) the at least one portion of the energy storage device (2) is performed while the vehicle is present at a charging station.

13. A computer program comprising instructions which, when executed by a control device, cause the control device to carry out the method according to any one of the preceding claims.

14. A computer-readable medium comprising instructions which, when executed by a control device, cause the control device to carry out the method according to any one of claims 1 to 12.

15. A control device (100) configured to control an energy storage device (2) of a vehicle (1) for the purpose of preserving capacity of the energy storage device (2), the control device (100) being configured to:

in response to a request for a maintenance measure, discharge at least one portion of the energy storage device (2) in a discharge operation while controlling the discharge rate ($I_d$) of the at least one portion during said discharge operation to be equal to or above a predetermined discharge rate threshold ($I_{d\_th}$),
wherein said predetermined discharge rate threshold ($I_{d\_th}$) is greater than, and dependent of, a predefined charge rate ($I_c$) for the at least one portion of the energy storage device (2) or the energy storage device (2).

16. A vehicle (1) comprising an energy storage device (2) and the control device (100) according claim 15.

*Fig. 1*

*Fig. 2*

*Fig. 3*

$SOC_{th\_max}$

$I_{d\_th}$

$I_d$

$I_{d\_max}$

$SOC_{th\_min}$

$t_1$ $t_2$ $t_3$

$t$

*Fig. 4*

500

511

514

510

550 P

560 P

512

520

515

530

540

599

*Fig. 5*

*Fig. 6*

Europäisches
Patentamt

European
Patent Office

Office européen
des brevets

# EUROPEAN SEARCH REPORT

Application Number

EP 22 17 3679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/135297 A1 (MIKHAYLIK YURIY V [US] ET AL) 6 May 2021 (2021-05-06) * paragraphs [0001] - [0002], [0039] - [0082], [0163] - [0185], [0210]; figures 1-4d * * tables 1-4 * | 1-16 | INV. B60L58/13 B60L58/14 B60L58/21 B60L58/16 H02J7/00 |
| X | US 2004/033422 A1 (KOZAWA AKIYA [JP] ET AL) 19 February 2004 (2004-02-19) | 1 | |
| A | * paragraphs [0002], [0009] - [0027] * * figures 1-4 * * claims 1-20 * | 2-16 | |
| A | US 2011/156652 A1 (KISHIYAMA CLAY H [US] ET AL) 30 June 2011 (2011-06-30) * the whole document * | 1-16 | |
| A | US 8 760 118 B2 (CHRISTENSEN JOHN F [US]; AHMED JASIM [US] ET AL.) 24 June 2014 (2014-06-24) * the whole document * | 1-16 | |

TECHNICAL FIELDS
SEARCHED (IPC)

B60L
H02J

The present search report has been drawn up for all claims

| Place of search | Date of completion of the search | Examiner |
|---|---|---|
| The Hague | 29 September 2022 | Schmitt, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 3679

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2022

| Patent document cited in search report | | Publication date | Patent family member(s) | | Publication date |
|---|---|---|---|---|---|
| US 2021135297 | A1 | 06-05-2021 | NONE | | |
| US 2004033422 | A1 | 19-02-2004 | US | 2004033422 A1 | 19-02-2004 |
| | | | WO | 2004105161 A2 | 02-12-2004 |
| US 2011156652 | A1 | 30-06-2011 | EP | 2340960 A2 | 06-07-2011 |
| | | | ES | 2880598 T3 | 25-11-2021 |
| | | | HU | E055647 T2 | 28-12-2021 |
| | | | JP | 5258871 B2 | 07-08-2013 |
| | | | JP | 2011138767 A | 14-07-2011 |
| | | | PL | 2340960 T3 | 27-12-2021 |
| | | | US | 2011156652 A1 | 30-06-2011 |
| US 8760118 | B2 | 24-06-2014 | DE | 112012002283 T5 | 13-03-2014 |
| | | | US | 2012306275 A1 | 06-12-2012 |
| | | | WO | 2012167019 A1 | 06-12-2012 |

EPO FORM P0459

For more details about this annex : see Official Journal of the European Patent Office, No. 12/82